# EUROPEAN PATENT SPECIFICATION

(11) **EP 4 150 128 B1**
(45) Date of publication and mention of the grant of the patent: **07.05.2025**
(21) Application number: 21724801.2
(22) Date of filing: 11.05.2021
(51) Int. Cl.: C21C 1/02, C21C 5/46, C21C 7/00, C21C 7/064, C21C 7/072, F27D 3/00, F27D 3/18, F27D 27/00, F27D 3/16

(54) **STIRRING METHOD OF LIQUID METAL AND ASSOCIATED DEVICE**
RÜHRVERFAHREN FÜR FLÜSSIGES METALL UND ZUGEHÖRIGES VORRICHTUNG
PROCÉDÉ D'AGITATION DE MÉTAL LIQUIDE ET DISPOSITIF ASSOCIÉ

(30) Priority: 11.05.2020 WO PCT/IB2020/054439
(43) Date of publication of application: 22.03.2023
(73) Proprietor: ArcelorMittal, 1160 Luxembourg (LU)
(72) Inventor: GAMA DE MAGALHAES, Humberto, 57050 Plappeville (FR)
(74) Representative: Lavoix
(86) International application number: PCT/IB2021/053987
(87) International publication number: WO 2021/229422

(56) References cited:
- WO-A1-2011/049240
- CN-A- 106 987 684
- JP-A- H06 221 773
- KR-A- 20140 028 469
- US-A1- 2017 362 672

## Description

The invention is related to a method for stirring liquid metal in a steelmaking vessel and to a stirring device allowing to perform such a method.

During the hot-metal pre-treatment or refining of steel, liquid steel, or more generally liquid metal, is poured into a steelmaking vessel, such as a ladle, so as to be brought to a targeted composition. This targeted composition of the liquid steel depends notably on the required composition of the final cast semi-product and so of its grade. Newly developed grades, notably for the automotive industry, require a strict control of impurities into the liquid steel to avoid subsequent issues in the manufacturing process or defects in the final product. This makes the efficiency of the refining step(s) in both terms of production time and reliability essential.

One of the most unwanted impurities is sulphur. Sulphur is present in most raw materials used for steelmaking (iron ore, coke and coal) and may also come the use of low-quality scrap. Sulphur increases the brittleness of steel and decreases the weldability and corrosion resistance. Therefore, sulphur needs to be removed, to typically below 0,015% and up to 0,0010% for low-sulphur grades. This may be done at different stage along the steelmaking process route, in the blast furnace, in the torpedo car, in the converter but also in the later stages of steelmaking when sulphur is present in the liquid steel. It can be done through a specific desulphurization step or in parallel with other refining steps.

The main reaction for sulphur transfer which can occur at high temperature combines dissolved sulphur (S) in the liquid metal and calcium ions in the slag to form calcium sulphide which can be dissolved in the slag, depending on its "sulphide capacity":

S + (CaO) = (CaS) + O

Therefore, conditions for an efficient desulphurization imply reducing conditions, including low content in oxygen O in steel and low FeO +MnO in the slag , a basic slag near the lime saturation having high sulphide capacity to ensure a high partition ratio of sulphur and an efficient stirring to boost kinetics toward the equilibrium.

One of the ways to decrease the sulphur content in liquid metal is thus to improve the stirring efficiency in the vessel and notably to avoid the presence of so-called dead zones, i.e. areas where the interactions between injected agents and the liquid metal is not effective and/or where the flow velocity is lower than the average flow velocity in the vessel. Stirring is usually performed by injection of an inert gas, such as nitrogen or argon, into the liquid metal. This stirring may be performed by a lance comprising injection holes immersed into the metal and/or by a porous plug located in the bottom of the steelmaking vessel. However, with those techniques big dead zones are observed on the circumference of the vessel farthest from the gas injection points. One way to improve stirring would be to increase the flow rate of injected gas but it would create metal splashes which are extremely dangerous for operators working around and which may damage equipment.

Document JPH06221773 describes a lance allowing to improve desulphurization efficiency, this lance for injecting powder into molten steel comprising two injection points, one at the tip of the lance and the second in the vicinity of the slag/steel interface. This lance allows to promote reactions between liquid and slag, but dead zones still exist in the liquid metal. Additionally, CN 106 987 684 A belongs to the field of hot metal pretreatment in the iron and steel metallurgy technology, in particular to a rotary multi-stage magnesium spray desulfurization lance.

There is so a need for a stirring method allowing to improve the desulfurization, and more generally the cleanliness, of liquid metal. There is also a need for a stirring method which reduces the presence of dead zones into the stirred liquid metal without being detrimental to the productivity.

The scope of the present invention is defined by independent claims 1 and 3, and further embodiments of the invention are specified in dependent claims 2 and 4-9.

Other characteristics and advantages of the invention will emerge clearly from the description of it that is given below by way of an indication and which is in no way restrictive, with reference to the appended figures in which:
- Figure 1 illustrates a steelmaking vessel and a stirring device to perform a method according to the invention
- Figure 2 illustrates a stirring device according to one embodiment of the invention
- Figure 2A illustrates a 1^{st} injection mean according to one embodiment of the invention
- Figure 2B illustrates a 2^{nd} injection mean according to one embodiment of the invention
- Figure 3A illustrates a projection of the 1^{st} injection mean along a plan A-A perpendicular to the vertical axis of the lance
- Figure 3B illustrates a projection of the 2^{nd} injection mean along a plan A-A perpendicular to the vertical axis of the lance
- Figure 4 is a simulation of flow of liquid metal when using a stirring method according to different configurations
- Figures 5A and 5B are results of simulation when using a stirring method according to different embodiments

Elements in the figures are illustrations and may not have been drawn to scale.

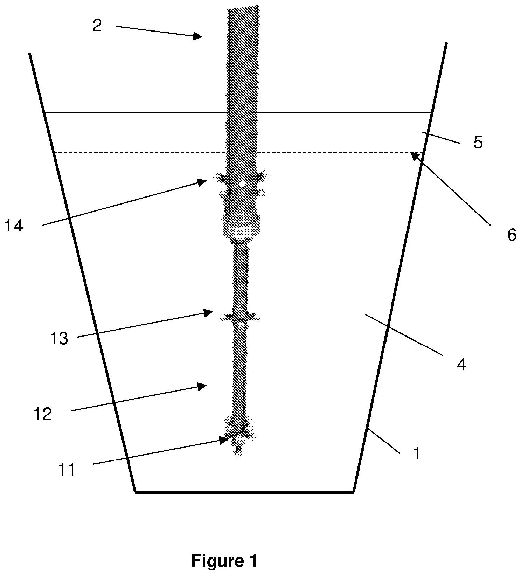

In figure 1 is illustrated a steelmaking vessel 1 containing liquid metal 4 surrounded by a slag layer 5. The term liquid metal 4 is used to encompass both hot metal or liquid steel. This steelmaking vessel 1 may for example be a ladle or any other suitable vessel allowing to perform actions on hot metal or liquid steel composition. This vessel 1 may be used for different steps of the steelmaking process such has hot-metal pre-treatment, liquid steel refining, secondary metallurgy, desulphurization... wherein a stirring is necessary to enhance reactions between liquid metal 4 and slag 5. This stirring is performed with a stirring device 2. In a method according to the invention the stirring is performed by injection of an inert gas, eventually containing powder at at least two distinct injection points along the depth of the liquid metal. The gas may be argon or nitrogen. The powder maybe lime, magnesium, fluorspar, calcium carbide, calcium aluminates, synthetic slags or even soda ash. According to the invention, the first injection point 12 is located in the bottom half of the liquid metal, preferably as deep as possible in the liquid metal 4. In a preferred embodiment, it is located at less than 100mm, preferably less than 50mm, from the vessel bottom. By vessel bottom it is meant the internal bottom, refractories layer excluded when there is one. This location depends on the size of the vessel 1. The second injection point 14 is located in the vicinity below the interface 6 between liquid metal 4 and slag layer 5, at less than 500mm below said interface 6. As previous, this location depends on the size of the vessel 1. During injection, at least a part of the stirring device 2 rotates. The rotation speed is between 65 and 150rpm (rotation per minute). Combination of the two injection points and of the rotation allow to improve mass transfer between slag 5 and liquid metal 4 at the interface while not creating any dead zones. This thus globally improves desulphurisation of the liquid metal by promoting the formation of calcium sulphides and reduce the desulphurization time. It also promotes agglomeration, coalescence and flotation of inclusions improving thus cleanliness of the liquid metal. Each of the injection mean may be independently controlled in terms of flow rate and pressure, it means each injection mean may have its own gas injection channel pipe and/or be provided with its own flow control mean, such as a valve, so that flow rate can be independently controlled from one injection mean to another.

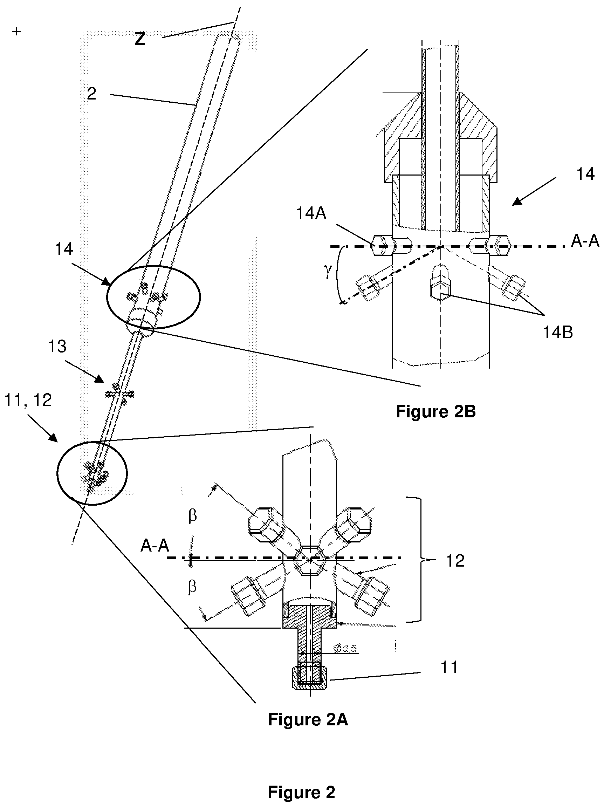

Figure 2 illustrates a device 2 to perform a stirring method according to the invention. This device 2 comprises a lance 3 and at least two injection mean 11,12,13,14 located at different locations along the length of the lance 3. The 1^{st} injection mean 12 is located at the end 21 of the lance 3 intended to be immersed into the liquid metal 4 and the 2^{nd} injection mean 14 is located so as to be in the vicinity, at less than 500mm, preferably less than 300mm, below the interface 6 between liquid metal 4 and slag layer 5 when the device 2 is immersed into the steelmaking vessel 1. The lance 3 is able to rotate as one single body or may comprise several parts being able to rotate independently from one another. The rotation speed is between 65 and 150rpm (rotation per minute). In another embodiment, the device 2 comprises a third injection mean 11 located at the tip of the lance 3. The device 2 may also comprise in addition or in replacement of this third injection mean 11, a fourth injection mean 13 located at the middle of the lance 3. In a preferred embodiment the lance 3 is able to rotate around its vertical axis Z. The rotation of the lance 3, as well as the addition of additional injection means 11,13, allows to improve homogenization and reduce the gradients of concentration of elements and temperature in the liquid metal, thus improving process performances such as decrease of the mixing time, better dissolution of fluxes loaded into the vessel for process purposes, improved cleanliness of the liquid metal.

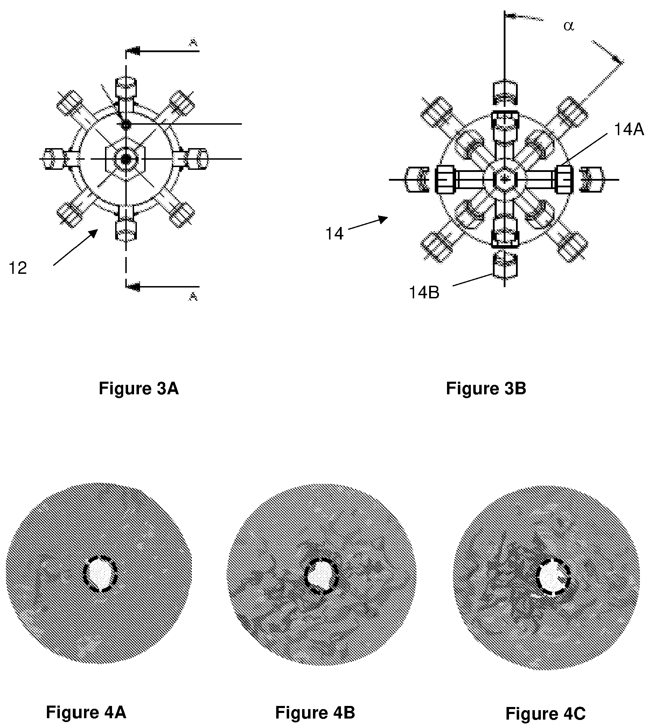

Figure 2A illustrates an embodiment of a 1^{st} and 3^{rd} injection means 11, 12. In this embodiment the 1^{st} injection mean is composed of eight injection holes split in two levels of four holes and symmetrically distributed around the circumference of the lance 3. A projection of this 1^{st} injection mean 12 on a plan A-A perpendicular to the vertical axis Z of the lance 3 is illustrated in figure 3A. In a most preferred embodiment, each of the injection hole makes an angle β with the axis perpendicular to the vertical axis Z of the lance 3, said angle β being preferably the same for each injection hole. This angle β is preferentially comprised between 20 and 50°, and most preferably between 25 and 35°. In this specific embodiment the injection mean comprises eight injection holes, but the configuration, both in terms of symmetry and angle β can be applied to any mean comprising at least four injection holes. This configuration allows to get a better distribution of the gas into the liquid metal and to improve the stirring efficiency. The 3^{rd} injection mean 11 is a single injection hole located at the tip of the lance 3.

Figure 2B illustrates an embodiment of a 2^{nd} injection mean 14. In this embodiment the 2^{nd} injection mean 14 is composed of eight injection holes split in two levels of four holes and symmetrically distributed around the circumference of the lance 3. In this embodiment the first level injection holes 14A are perpendicular to the vertical axis Z of the lance 3. The second level injection holes 14B makes an angle γ with the axis perpendicular to the vertical axis Z of the lance 3, said angle γ being preferably the same for each injection hole. This angle γ is preferentially comprised between 25 and 35° and most preferably of 30°. A projection of this 2^{nd} injection mean 14 on a plan A-A perpendicular to the vertical axis Z of the lance 3 is illustrated in figure 3B. When projected on the plan A-A perpendicular to the vertical axis Z, each first level injection hole 14A makes an angle α with a second level injection hole 14B comprised between 40 and 50°. The angle α is preferably of 45°. In this specific embodiment the injection mean comprises eight injection holes, but the configuration, both in terms of symmetry and angles can be applied to any mean comprising at least four injection holes. This configuration allows to get a better distribution of the gas into the liquid metal and to improve the stirring efficiency.

In the embodiment of a device according to the invention as illustrated in figure 2, the lance 3 further comprises a fourth injection mean 13 located in the middle of the lance part defined to be immersed into the liquid metal. This fourth injection mean preferentially comprise four injection holes symmetrically distributed around the circumference of the lance 3. Those injection holes are preferably perpendicular to the vertical axis Z of the lance 3.

As a matter of illustration for a ladle able to comprise 300Tons of liquid steel, having as internal dimensions (without the refractory layer) a height of 4700mm and a diameter of 4100mm, the lance 3 has a length of 6000mm and is immersed over 3600mm into the liquid steel. The first injection mean 12 is located at 100mm above the ladle bottom and the 2^{nd} injection mean 14 is located at 300mm below the interface 6 between slag layer 5 and liquid steel 4.

### Examples

A simulation by CFD (Computational Fluid Dynamics) was performed, results of which are represented in figure 4. Those simulations were done taking into account same flow rate, air, liquid metal and slag thickness as normally measured in the steelmaking plants.

First simulation (Figure 4A) is when using a fixed lance with only an injection nozzle located at the tip of the lance. Second simulation (Figure 4B) is when using a lance according to the embodiment described in figure 2 and with a rotation speed of 65 rpm, while third simulation (Figure 4C) is when using same lance as figure 4B but with a rotation speed of 120rpm

What is represented is the liquid metal velocity at the liquid metal / slag interface in a steady state, 2,5 min after the start of gas injection. The stirring device is located at the centre of the circle.

We can see that the size of the "open-eye" is not bigger when using a stirring device according to the invention, even when the rotating speed is increased, compared to the size of the open-eye observed for a fixed lance. This open eye is the fact that when stirring push away the metal from the device, it creates an opened surface in the liquid metal, this exposing it to the external atmosphere. This is detrimental to the steel quality and/or cleanliness, as the presence of an open eye implies that the slag is no longer covering the liquid metal which is thus in direct contact with air and will be oxidised. This must be avoided. Contrary with what could have been expected, the presence of an injection point near the metal /slag interface together with a rotation of the device does not imply generation of open-eye.

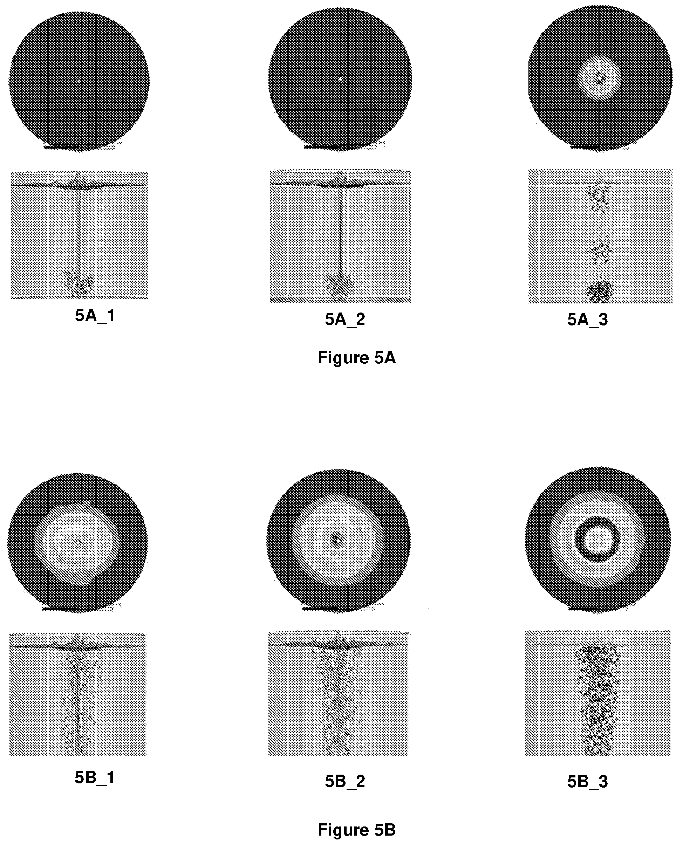

Other CFD simulations were performed to compare three different processes to stir liquid metal in the ladle by lance: a fixed lance with only one injection point located at the tip of the lance; a rotating T-shaped lance with two injection means at the tip of the lance and a lance according to the invention with four injection points 11, 12, 13 and 14 and a rotation of 120 rpm. Results are illustrated on figures 5A and 5B.

figures 5A illustrate the simulation at the beginning of the injection. It shows that the lance according to the invention (5A_3) generates turbulence at the interface liquid metal/slag faster than the fixed lance (5A_1) and the T-shaped rotative lance (5A_2) without forming any open-eye thanks to the presence of the injection point 14 at the slag/metal interface and large distribution of bubbles growing up to the interface.

Figure 5B. illustrates the same simulation but few minutes after the beginning. Advantage of the stirring method (5B_3) according to the invention is even clearer. Presenting huge quantity of bubbles from small to the big size during the process and very large plume comparing to fixed lance (5B_2), which enhances homogenization of liquid metal and/or remove the inclusions thus improving the cleanliness into the liquid steel. Indeed high residence time of the bubbles means high probability for inclusions to meet some bubbles and then be removed by flotation. In addition, the improvement of mass transfer at the slag/metal interface gives opportunity to catch those inclusions, increasing thus the cleanliness while working with flow rate and pression levels which are not detrimental to the open-eye size and thus avoid reoxidation of the liquid metal in atmosphere.

Results presented in Table 1 have been obtained with a water model using a small-scale lance with injection means 12 and 13 according to the invention. Rotation was activated or not (fixed lance means rotation is not activated, rpm stand for number of rotations per minute), global flow rate in litres per minute (L/min) was varied, and mixing time was measured using NaCl as chemical tracer to calculate the mixing time through the measurements of the water conductivity over time.

When comparing trials with a fixed lance and with a rotating lance according to the invention we can see that, the mixing time is reduced with a method according to the invention.

| | | | |
|---|---|---|---|
| Flow rate (L/min) | 60 | 80 | 100 |
| Fixed Lance | 68 | 63 | 51 |
| Rotative Lance - 65 RPM | 57 | 43 | 38 |
| Mixing time reduction, % | 16 | 31 | 26 |

The method according to the invention allows thus to have a better stirring efficiency, with reduced mixing time and to have bubbles size and distribution allowing to improve inclusions flotation while enhancing exchanges between slag and metal. All these effects are beneficial for the desulfurization and cleanliness of steel.

## Claims

1. A method to stir liquid metal (4) contained into a steelmaking vessel (1), said liquid metal being surrounded by a slag layer (5), the method comprising injection of a gas, optionally containing a powder, by at least two injection means located at at least two different injection points (11,12,13,14) along the depth of the liquid metal, the first injection point (12) being located in the bottom half of the liquid metal and the second injection point (14) being located at less than 500 millimetres below the interface (6) between liquid metal (4) and slag layer (5), said gas injection being performed while rotating injection means along the vertical axis of the vessel (1) at a rotation speed comprised between 65 and 150rpm.

2. A method according to claim 1 wherein each injection mean is independently controlled from one another in terms of injection flow rate and pressure.

3. A stirring device (2) allowing to perform a method according to anyone of the previous claims said device comprising a lance (3) provided with at least two injection means (12,14), the first injection mean (12) being located at the end (21) of the lance intended to be immersed into the liquid metal (4), and the second injection mean (14) being located at less than 500 millimetres below the interface (6) between liquid metal (4) and slag layer (5) when the device (2) is immersed into the steelmaking vessel (1) , at least the part of the lance (3) comprising the injection means being able to rotate along the vertical axis of the vessel (1), at a rotation speed comprised between 65 and 150rpm.

4. A stirring device according to anyone of the preceding claims wherein each injection mean is provided with its own control mean able to control the flow rate and pressure of the gas injected by said injection mean independently from the other injection means.

5. A stirring device according to anyone of the preceding claims wherein the second injection mean (14) comprises at least four injectors, each of the injectors making an angle β with the axis perpendicular to the vertical axis Z of the lance 3 comprised between 20 and 50°.

6. A stirring device according to anyone of the preceding claims wherein the second injection mean (14) comprises at least four injectors, each of the injectors making an angle β with the axis perpendicular to the vertical axis Z of the lance 3 comprised between 25 and 35°.

7. A stirring device according to anyone of the preceding claims further comprising an additional injection mean (11) located at the tip of the lance (3) intended to be immersed into the liquid metal.

8. A stirring device according to anyone of the preceding claims further comprising an additional injection mean (13) located at the middle of the lance part immersed into the liquid metal.

9. A stirring device according to anyone of the preceding claims wherein the injection means are injection nozzles.

## Patentansprüche

1. Verfahren zum Rühren von flüssigem Metall (4), das in einem Stahlerzeugungsbehälter (1) enthalten ist, wobei das flüssige Metall von einer Schlackenschicht (5) umgeben ist, das Verfahren umfassend eine Injektion eines Gases, das optional ein Pulver enthält, durch mindestens zwei Injektionseinrichtungen, die an mindestens zwei verschiedenen Injektionspunkten (11, 12, 13, 14) entlang der Tiefe des flüssigen Metalls angeordnet sind, wobei der erste Injektionspunkt (12) in der unteren Hälfte des flüssigen Metalls und der zweite Injektionspunkt (14) weniger als 500 Millimeter unterhalb der Grenzfläche (6) zwischen dem flüssigen Metall (4) und der Schlackenschicht (5) angeordnet ist, wobei die Gasinjektion durchgeführt wird, während die Injektionseinrichtungen entlang der vertikalen Achse des Behälters (1) mit einer Drehgeschwindigkeit zwischen 65 und 150 U/min drehen.

2. Verfahren nach Anspruch 1, wobei jede Injektionseinrichtung in Bezug auf die Injektionsmenge und den Injektionsdruck unabhängig voneinander gesteuert wird.

3. Rührvorrichtung (2), die es ermöglicht, ein Verfahren nach einem der vorherigen Ansprüche durchzuführen, die Vorrichtung umfassend eine Lanze (3), die mit mindestens zwei Injektionseinrichtungen (12, 14) versehen ist, wobei die erste Injektionseinrichtung (12) an dem Ende (21) der Lanze angeordnet ist, die in das flüssige Metall (4) eingetaucht werden soll, und sich die zweite Injektionseinrichtung (14) weniger als 500 Millimeter unterhalb der Grenzfläche (6) zwischen flüssigem Metall (4) und Schlackenschicht (5) befindet, wenn die Vorrichtung (2) in den Stahlerzeugungsbehälter (1) eingetaucht ist, mindestens der Teil der Lanze (3), der die Injektionseinrichtung umfasst, entlang der vertikalen Achse des Behälters (1) mit einer Drehgeschwindigkeit zwischen 65 und 150 U/min drehen kann.

4. Rührvorrichtung nach einem der vorherigen Ansprüche, wobei jede Injektionseinrichtung mit einer eigenen Steuereinrichtung versehen ist, die in der Lage ist, die Durchflussmenge und den Druck des von der Injektionseinrichtungen eingespritzten Gases unabhängig von der anderen Injektionseinrichtung zu steuern.

5. Rührvorrichtung nach einem der vorhergehenden Ansprüche, **dadurch gekennzeichnet, dass** die zweite Injektionseinrichtung (14) mindestens vier Injektoren umfasst, wobei jeder der Injektoren einen Winkel β mit der zu der vertikalen Achse Z der Lanze 3 senkrechten Achse bildet, der zwischen 20 und 50° liegt.

6. Rührvorrichtung nach einem der vorhergehenden Ansprüche, **dadurch gekennzeichnet, dass** die zweite Injektionseinrichtung (14) mindestens vier Injektoren umfasst, wobei jeder der Injektoren einen Winkel β mit der zu der vertikalen Achse Z der Lanze 3 senkrechten Achse bildet, der zwischen 25 und 35° liegt.

7. Rührvorrichtung nach einem der vorherigen Ansprüche, ferner umfassend eine zusätzliche Injektionseinrichtung (11), die sich an der Spitze der Lanze (3) befindet, die in das flüssige Metall eingetaucht werden soll.

8. Rührvorrichtung nach einem der vorherigen Ansprüche, ferner umfassend eine zusätzliche Injektionseinrichtung (13), die sich in der Mitte des in das flüssige Metall eingetauchten Lanzenteils befindet.

9. Rührvorrichtung nach einem der vorherigen Ansprüche, wobei die Injektionseinrichtungen Injektionsdüsen sind.

## Revendications

1. Procédé d'agitation de métal liquide (4) contenu dans une cuve de sidérurgie (1), ledit métal liquide étant entouré d'une couche de laitier (5), le procédé comprenant l'injection d'un gaz, contenant facultativement une poudre, par au moins deux moyens d'injection situés à au moins deux points d'injection différents (11, 12, 13, 14) le long de la profondeur du métal liquide, le premier point d'injection (12) étant situé dans la moitié inférieure du métal liquide et le second point d'injection (14) étant situé à moins de 500 millimètres sous l'interface (6) entre le métal liquide (4) et la couche de laitier (5), ladite injection de gaz étant effectuée en faisant tourner les moyens d'injection le long de l'axe vertical de la cuve (1) à une vitesse de rotation comprise entre 65 et 150 tr/min.

2. Procédé selon la revendication 1, dans lequel chaque moyen d'injection est commandé indépendamment l'un de l'autre en termes de débit et de pression d'injection.

3. Dispositif d'agitation (2) permettant de mettre en œuvre un procédé selon l'une quelconque des revendications précédentes, ledit dispositif comprenant une lance (3) munie d'au moins deux moyens d'injection (12, 14), le premier moyen d'injection (12) étant situé à l'extrémité (21) de la lance destinée à être immergée dans le métal liquide (4), et le second moyen d'injection (14) étant situé à moins de 500 millimètres sous l'interface (6) entre le métal liquide (4) et la couche de laitier (5) lorsque le dispositif (2) est immergé dans la cuve de sidérurgie (1) , au moins la partie de la lance (3) comprenant les moyens d'injection pouvant tourner le long de l'axe vertical de la cuve (1), à une vitesse de rotation comprise entre 65 et 150 tr/minute.

4. Dispositif d'agitation selon l'une quelconque des revendications précédentes, dans lequel chaque moyen d'injection est pourvu de son propre moyen de commande capable de commander le débit et la pression du gaz injecté par ledit moyen d'injection indépendamment des autres moyens d'injection.

5. Dispositif d'agitation selon l'une quelconque des revendications précédentes dans lequel le second moyen d'injection (14) comprend au moins quatre injecteurs, chacun des injecteurs faisant un angle β avec l'axe perpendiculaire à l'axe vertical Z de la lance 3 compris entre 20 et 50°.

6. Dispositif d'agitation selon l'une quelconque des revendications précédentes dans lequel le second moyen d'injection (14) comprend au moins quatre injecteurs, chacun des injecteurs faisant un angle β avec l'axe perpendiculaire à l'axe vertical Z de la lance 3 compris entre 25 et 35°.

7. Dispositif d'agitation selon l'une quelconque des revendications précédentes, comprenant en outre un moyen d'injection supplémentaire (11) situé à l'extrémité de la lance (3) destinée à être immergée dans le métal liquide.

8. Dispositif d'agitation selon l'une quelconque des revendications précédentes, comprenant en outre un moyen d'injection supplémentaire (13) situé au milieu de la partie de la lance immergée dans le métal liquide.

9. Dispositif d'agitation selon l'une des revendications précédentes, dans lequel les moyens d'injection sont des buses d'injection.
